# EUROPEAN PATENT APPLICATION

(11) **EP 2 733 396 A1**
(43) Date of publication of application: **21.05.2014**
(21) Application number: 12007820.9
(22) Date of filing: 20.11.2012
(51) Int. Cl.: F16J 15/08

(54) **Service gasket for internal combustion engine and method**

(71) Applicant: CATERPILLAR INC., Peoria IL 61629-6490 (US)
(72) Inventor: Chittenden, Jonathan R., Edwards, Illinois 61528 (US)
(74) Representative: Klang, Alexander H.

(57) **Abstract**

A service gasket (8) includes a one-piece laminate body (24) having a plurality of low pressure seals (40) positionable between an engine head (12) and an engine block (18), and a high pressure combustion seal (42) positionable between the engine head (12) and a sealing surface (22) of a protruding cylinder liner (16). The one-piece laminate body (24) further includes a plurality of pervasive base layers (50) extending from the outer perimeter (26) to the inner perimeter (28), and at least one non-pervasive service layer (60) located outwardly of the inner radial region (34), such that the service gasket (8) has an outwardly stepped-up thickness compensating for increasing a protrusion distance of a sealing surface (22) of the cylinder liner (16) during servicing the internal combustion engine (10).

## Description

### Technical Field

The present disclosure relates generally to a gasket for sealing between an engine head and an engine housing in an internal combustion engine, and relates more particularly to a service gasket configured to compensate for removing material from a top face of an engine block during servicing.

### Background

A wide variety of strategies are used for sealing between components in internal combustion engines. The use of gaskets for sealing about fluid transfer passages between an engine head and engine block, and for forming a combustion seal about cylinders within the block has long been known in the art. Designs are known which integrate these two sealing functions into a single part, as well as designs separating the sealing functions between multiple components. Certain gaskets are compound and provide all the needed seals associated with multiple cylinders, whereas others are dedicated to just one cylinder in the engine. In the high pressure environment of compression ignition engines, robust design of such components may be particularly desirable, and those skilled in the art will be familiar with the downsides of head gasket failure. United States Patent No. 4,351,534 to McDowell is directed to an abrasive-erosion resistant gasket assembly. McDowell proposed the use of elastomeric material in the gasket to reduce abrasion and erosion resulting from shearing movement between the engine head and engine block. While McDowell may perform its intended functions, there is room for improvement.

Adding to the challenges of attaining sufficiently reliable and effective seals are variations from engine to engine, particularly with respect to dimensions. While most engines can be expected to be newly manufactured to certain fairly tight specifications, over time servicing of an engine can lead to deviations in the size and shape of components involved in the sealing functions noted above. When an engine is brought in for servicing, defects and/or damage in the engine head and engine block may have resulted from the relatively harsh operating conditions and long service life. In repairing such defects and the like, dimensions of engine components may be changed from specifications engineered for specific functionality in a new engine. A typical example relates to the removal of embedded sealing bead material in the top face or head face of the engine block. Relatively high clamping loads are typically used to attach the engine head and engine block, where one or more gaskets are positioned therebetween. The clamping loads and other conditions can embed material of sealing beads, e.g. bits of metal, into the material of the top face. Thus, when the engine head is decoupled from the engine block for rebuild, remanufacturing, routine servicing, or repair of some problem, defects and the like in the engine block are often evident.

An unsophisticated way to deal with this issue is to simply install a new gasket and ignore the imperfections in the block. One problem with this approach is that the defects and the like may compromise gasket performance, leading to seal failure or premature degradation. In other instances, technicians may skim-cut or otherwise machine away material from the top face to remove the embedded material or other undesired features, then build up the material of the engine block, and machine it once again to restore the engine block to specifications. This technique of machining away defects, adding material, then machining it again is understandably quite labor intensive.

### Summary

In one aspect, a service gasket for sealing between an engine head clamped to an engine housing in an internal combustion engine is provided, where the engine housing includes an engine block having a top face machined during servicing such that a distance from the top face to a sealing surface of a protruding cylinder liner is increased from a distance specified for distributing a clamping load between the engine head and the engine housing among a plurality of seals of a standard gasket. The service gasket includes a one-piece laminate body having an outer perimeter, an inner perimeter defining a cylinder opening having a center axis, an outer radial region adjoining the outer perimeter, and an inner radial region adjoining the inner perimeter. The outer radial region defines a plurality of bolting apertures and a plurality of fluid transfer apertures, and includes a plurality of low pressure seals extending about the plurality of fluid transfer apertures, and is positionable between the engine head and the top face of the engine block. The inner radial region includes a high pressure combustion seal extending about the cylinder opening, and is positionable between the engine head and the cylinder liner sealing surface. The one-piece laminate body further includes a plurality of pervasive base layers located in both the outer and inner radial regions, and at least one non-pervasive service layer located in the outer radial region, such that the one-piece laminate body has an outwardly stepped-up thickness configured to compensate for the increased distance in distributing the clamping load.

In another aspect, a service gasket for sealing between an engine head clamped to an engine housing in an internal combustion engine includes a one-piece laminate body having an outer perimeter, an inner perimeter defining a cylinder opening having a center axis, an outer radial region adjoining the outer perimeter, and an inner radial region adjoining the inner perimeter. The outer radial region defines a plurality of bolting apertures and a plurality of fluid transfer apertures, and includes a plurality of low pressure seals extending about the plurality of fluid transfer apertures, and is positionable between the engine head and the top face of an engine block of the engine housing. The inner radial region includes a high pressure combustion seal extending about the cylinder opening, and is positionable between the engine head and a sealing surface of a cylinder liner protruding from the top face. The one-piece laminate body further includes a plurality of pervasive base layers extending from the outer perimeter to the inner perimeter, and at least one non-pervasive service layer located outwardly of the inner radial region, such that the service gasket has an outwardly stepped-up thickness compensating for increasing a protrusion distance of the sealing surface during servicing the internal combustion engine.

In still another aspect, a method of preparing an internal combustion engine for service includes receiving an engine housing including an engine block having a top face machined such that a distance from the top face to a sealing surface of a protruding cylinder liner is increased from a distance specified for distributing a clamping load between the engine head and the engine housing through a standard gasket. The method further includes installing a service gasket including a one-piece laminate body having a high pressure combustion seal and a plurality of fluid transfer seals between the engine head and the engine housing, and clamping the engine head to the engine housing via a plurality of bolts extending through a plurality of bolting apertures formed in the service gasket. The method still further includes distributing a clamping load between the engine head and the engine housing through the service gasket such that an outwardly stepped-up thickness of the gasket compensates for the increased distance

### Brief Description of the Drawings

Figure 1 is a sectioned side diagrammatic view of an internal combustion engine, according to one embodiment;
Figure 2 is a top view of a service gasket suitable for use in the engine of Figure 1;
Figure 3 is a sectioned view taken along line 3-3 of Figure 2;
Figure 4 is a sectioned view taken along line 4-4 of Figure 3;
Figure 5 is a sectioned view taken along line 5-5 of Figure 4;
Figure 6 is an enlarged view of a portion of the engine of Figure 1; and
Figure 7 is a sectioned view through a portion of a service gasket according to another embodiment.

### Detailed Description

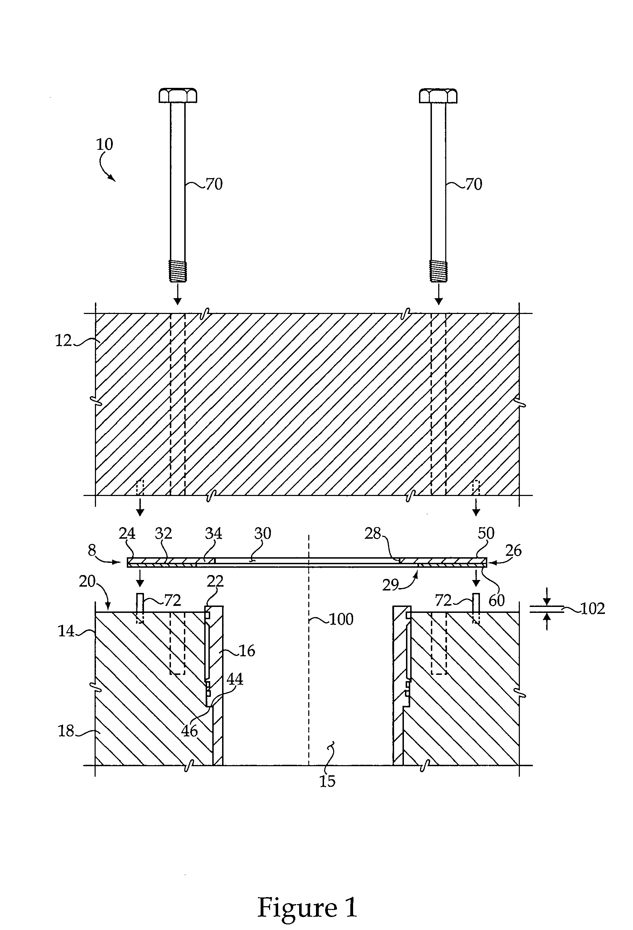

Referring to Figure 1, there is shown an internal combustion engine 10 according to one embodiment. Internal combustion engine 10 may include a direct injection compression ignition diesel engine. Alternatives are contemplated, however, such as spark-ignited engines, including natural gas engines, port injected engines and still others. Engine 10 may include an engine head 12 and an engine housing 14. Engine head 12 may include a composite engine head wherein a plurality of different engine head units are coupled with engine housing 14, but might instead include a unitary head design. Engine housing 14 may define a plurality of cylinders, one of which is shown and labeled via reference numeral 15. Certain features of engine 10 such as pistons, a crankshaft, camshafts, fuel injectors, etc., are omitted from the Figure 1 depiction, however, such components are well known in the art.

Engine housing 14 may further include an engine block 18 having a top face 20, and a cylinder liner 16 protruding from engine block 18. Cylinder liner 16 may be one of a plurality of cylinder liners associated one with each of the plurality of cylinders of engine 10. In the illustrated embodiment, cylinder liner 16 is a mid-support cylinder liner having a shoulder 46 abutting a ledge 44 within engine block 18. A sealing surface 22 of cylinder liner 16 is spaced from top surface 20. Top face 20 of engine block 18 has been machined during servicing such that a distance 102 from top face 20 to sealing surface 22 has been increased from a protrusion distance specified for distributing a clamping load between engine head 12 and engine housing 18 among a plurality of seals of a standard gasket, the significance of which will be apparent from the following description.

Engine 10 further includes a service gasket 8 positioned between engine head 12 and engine housing 14, and configured to compensate for the increased distance. Service gasket 8 may include a one-piece laminate body 24 including an outer perimeter 26, and an inner perimeter 28 defining a cylinder opening 30 having a center axis 100. Body 24 may further include an outer radial region 32 adjoining outer perimeter 26, and an inner radial region 34 adjoining inner perimeter 28. Service gasket 8 may be configured via differing thicknesses of outer and inner radial regions 32 and 34 to compensate for the increased distance established during servicing engine 10, as mentioned above. During remanufacturing, rebuilding, or other service procedures, defects in engine block 18 may be remedied by machining away material from top face 20. Defects may include, but are not limited to, corrosion, cracks, pits, and embedded sealing bead material from a previously installed standard gasket or service gasket. For practical reasons, a depth of material is typically removed uniformly from the top face of the serviced engine block such that its elevation is uniformly decreased. Removing material in this manner increases protrusion distance 102 as defined by the vertical spacing between sealing surface 22 and top face 20.

As discussed above, after machining an engine block for such purposes, the top face may be built back up via spray welding or other labor intensive techniques, then machined again to provide a flat and smooth surface, returning the protrusion distance to a specified distance designed for load distribution through a uniformly thick standard gasket. Service gasket 8 provides a more cost effective and simpler solution. To this end, service gasket 8 may include a plurality of pervasive base layers 50 located in both outer radial region 32 and inner radial region 34 and extending from outer perimeter 26 to inner perimeter 28. Service gasket 8 may also include at least one non-pervasive service layer 60 located in outer radial region 34, such that body 24 has an outwardly stepped-up thickness configured to compensate for the increased distance in distributing the clamping load. Pervasive base layers 50 extend throughout a full width of body 24, whereas the at least one non-pervasive service layer 60 is limited in extent within body 24. In one embodiment, inner perimeter 28 may include a first circular inner perimeter, and non-pervasive service layer 60 may include a second circular inner perimeter 62 concentric with inner perimeter 28 and being spaced outwardly thereof.

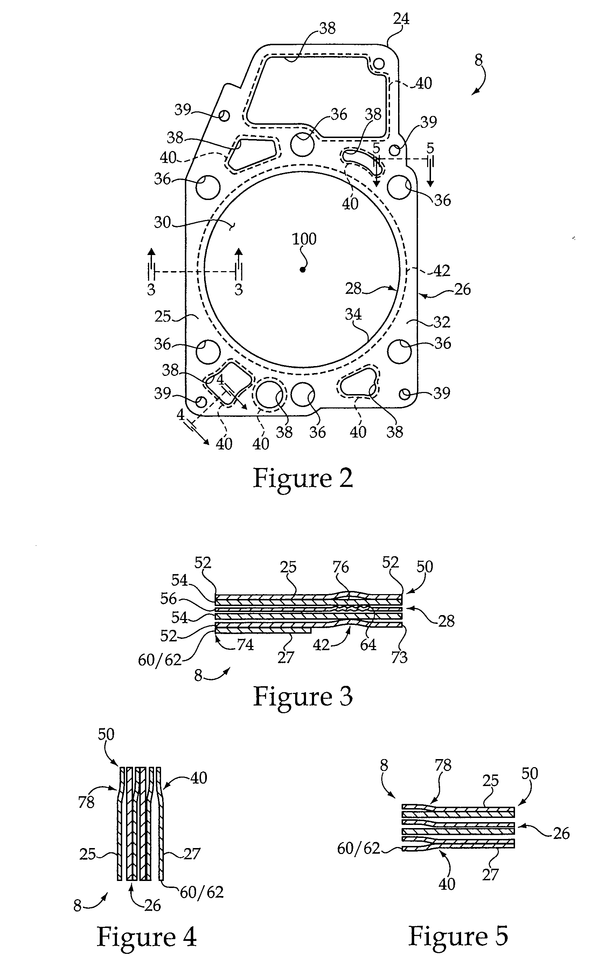

Referring also now to Figure 2, there is shown a top view of service gasket 8 showing a top or head-side surface 25 of body 24. Head-side surface 25 may be located on the uppermost one of pervasive base layers 50. Body 24 may define a plurality of bolting apertures 36 and a plurality of fluid transfer apertures 38 formed in outer radial region 32. Fluid transfer apertures 38 may be configured for conveying fluids such as engine oil, coolant or air between engine head 12 and engine housing 14, and accommodating push rods through the largest one of apertures 38, positioned closest to the top of the page in Figure 2, in a conventional manner. Bolting apertures 36 may be configured to receive a plurality of bolts 70 for clamping engine head 12 to engine housing 14. A total of six bolts passed through six bolting apertures arranged in a circular pattern provides one practical implementation strategy. Outer radial region 32 may also include a plurality of low pressure seals 40 extending about fluid transfer apertures 38, shown in phantom lines in Figure 2, and configured to fluidly seal about fluid transfer apertures 38. Additional low pressure seals (not shown) may extend about bolting apertures 36. In one embodiment, fluid transfer apertures 38 may be defined by all of pervasive base layers 50 and by the at least one non-pervasive service layer 60. Body 24 may further include a high pressure combustion seal 42 extending about cylinder opening 30, and being located in inner radial region 34. Combustion seal 42 may be formed only via features of base layers 50, as further described herein. When installed for service in engine 10, combustion seal 42 may be positioned between sealing surface 22 of cylinder liner 16 and an exposed lower surface of engine head 12, whereas low pressure seals 40 may be positioned between top face 20 and the exposed lower surface of engine head 12. A plurality of locating apertures 39 may also be formed in body 24 and configured to receive locating pins 72 for positioning body 24 in a desired location and orientation upon engine block 18 during assembling engine 10. Clamps (not shown) may be positioned within apertures 39 to hold layers 50 and 60 together, in a conventional manner.

Turning now also to Figure 3, there is shown a sectioned view taken along line 3-3 of Figure 2. It will be recalled that pervasive base layers 50 may extend from outer perimeter 26 to inner perimeter 28. Base layers 50 may each also include an exposed inner perimetric edge 73 adjoining cylinder opening 30. Individual ones of pervasive layers 50 are also shown in Figure 3, including a set of two metallic sealing sheets 52, an uppermost one of which includes upper surface 25, and a lowermost one of which includes a lower or block-side surface 27. Pervasive base layers 50 may also include a set of metallic spacer sheets 54 sandwiched between sealing sheets 52, and a metallic spring sheet 56 sandwiched between spacer sheets 54. In one practical implementation strategy, spring sheet 56 may include a wave configuration within combustion seal 42, in particular comprising a wave spring 64. Wave spring 64 may have an annular configuration, centered about axis 100.

Each one of metallic sealing sheets 50 may include a polymer coated steel sheet in one embodiment. The coating may comprise a fluoropolymer coating or any other suitable coating. In the illustrated embodiment, the coating is too thin to readily illustrate, but may be placed on both inside and outside surfaces of each of sealing sheets 50 and/or on both sides of spring sheet 56. As such, a coating may reside on all surfaces of base layers 50 which are in contact with another base layer, as well as on upper surface 25 and lower surface 27. A thickness of the coating may be equal to about 0.007 millimeters on surfaces of sealing sheets 52 and spring sheet 56 which contact another gasket layer. On surfaces of sealing sheets 52 contacting another engine component, the coating may have a thickness of about 0.024 millimeters. A thickness of sealing sheets 52 may be from about 0.2 millimeters to about 0.3 millimeters, and in one practical implementation strategy may be from about 0.23 millimeters to about 0.27 millimeters, nominally equal to about 0.25 millimeters. A thickness of spacer sheets 54 may be from about 0.3 millimeters to about 0.5 millimeters, and in one practical implementation strategy may be from about 0.38 millimeters to about 0.42 millimeters. As used herein the term "about" should be understood in the context of a number of significant digits. Thus, "about" 0.42 millimeters means from 0.415 millimeters to 0.424 millimeters, and so on.

Also shown in Figure 3 is a portion of non-pervasive service layer 60. Service layer 60 may also include a metallic sealing sheet 62, having a thickness similar or identical to that of sealing sheets 52, and having a polymer coating on an inside and outside surface thereof. It may further be noted that each of base layers 50 and also service layer 60 includes an exposed outer perimetric edge 74 located at outer perimeter 26. Each of outer perimetric edges 74 defines an identical footprint, for instance the footprint apparent in Figure 2. Another way to understand this feature is that the exposed outer edges 74 of all the layers 50 and 60 making up body 24 may define overlapping collinear lines, rendering the shape of service gasket 8 shown in Figure 2. In the illustrated embodiment, gasket 8 is configured for providing a high pressure combustion seal about a total of one cylinder of engine 10, and low pressure seals about a total of six fluid transfer apertures each associated with that one cylinder. In alternative embodiments, gasket 8 could be compound such that it provides combustion seals about multiple cylinders, and fluid transfer seals about many fluid transfer apertures, associated with each of the multiple cylinders. In one version, all the combustion seals and fluid transfer seals needed in an engine might be provided in a single service gasket.

Combustion seal 42 may include a full bead seal in one embodiment, whereas low pressure seals 38 may each include a half bead seal.

In Figure 3 it may be noted that the one of sealing sheets 52 which includes upper surface 25 has a full sealing bead 76, such that a profile of the sheet is doubly sloped at combustion seal 42. In other words, the profile slopes up at one side of combustion seal 42 then slopes down at the other side of combustion seal 42 such that sealing bead 76 has a symmetrical convex shape relative to adjoining portions of surface 25, and a concave shape relative to adjoining portions of surface 27. It will be further understood that since combustion seal 42 is circumferential of inner perimeter 28, combustion seal 42 and full sealing bead 76 may both have an annular configuration, centered on axis 100.

In contrast, low pressure seals 40 may include half bead seals. Referring also to Figure 4, there is shown a sectioned view taken along line 4-4 of Figure 2, through one of low pressure seals 38. The low pressure seal shown includes a half sealing bead 78. Half sealing bead 78 may be thus be singly sloped. Half sealing bead 78 may be formed in part by portions of sealing sheets 52 having a concave shape relative to surface 25 and a convex shape relative to surface 27, and in part by a portion of sealing sheet 62 in which the convex and concave relationships are reversed. Stated another way, sealing sheets 52 may each have a base profile while sealing sheet 62 has an inverted profile. The low pressure seal 40 shown in Figure 4 may also have an annular configuration. Referring also to Figure 5, there is shown a sectioned view taken along line 5-5 through a different one of low pressure seals 40 also having a half sealing bead 78. The half sealing bead 78 shown in Figure 5 may be similar to the one shown in Figure 4, but rather than having a concave shape in sealing sheets 52 relative to upper surface 25 and a convex shape relative to lower surface 27 and opposite shapes in sealing sheet 62, as in the low pressure seal of Figure 4, the pattern may be the opposite. Using a sealing sheet which is inversely profiled in service layer 60 as compared with the base profiles in base layers 50 enables the portions of service layer 60 within low pressure seals 40 to behave as independent springs in performing the desired sealing function. In an embodiment where a spacer sheet is positioned between layers 50 and 60, congruent profiles of the sealing sheets in the base and service layers might be used. Moreover, rather than an annular configuration, the low pressure seal 40 shown in Figure 5 may be generally crescent shaped. It may be noted that a shape of low pressure seals 40 tracks a shape of the corresponding fluid transfer aperture 38. It may further be noted that some of low pressure seals 40 may have convex sealing beads while others may have concave sealing beads, relative to surfaces 25 or 27 as the case may be. In regions of body 24 surrounding each of bolting apertures 36, sealing beads may also be provided, in a conventional manner.

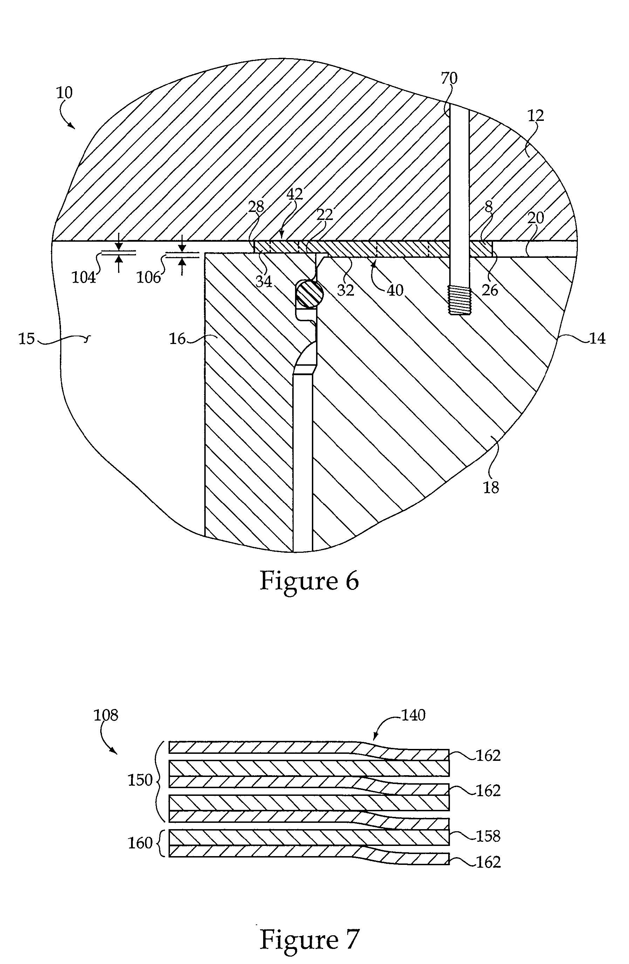

The one or more service layers used in service gaskets according to the present disclosure may include one or more sealing sheets as noted above. In the embodiment of Figures 2-5, sealing sheets 52 and 62 may have the different profiles as shown. In other embodiments, sealing sheets of the one or more service layers may be substantially identical to the sealing sheets of the base layers but for the absence of any material of the service layer sealing sheet within the corresponding inner radial region of the service gasket. Referring to Figure 7, there is shown a service gasket 108 having a plurality of pervasive base layers 150 and at least one non-pervasive service layer 160, where sealing sheets 152 of base layers 150 and a sealing sheet 162 of service layer 160 all have congruent, and potentially identical, profiles. The section view of Figure 7 is through a low pressure seal 140 of gasket 108. Thus, it may be noted that a shape of sealing sheet 162 may be the same as a shape of sealing sheets 152 in an outer radial region 132 of gasket 108. Similar to the foregoing embodiments, rather than extending to an inner perimeter, sealing sheet 162 would stop short of the combustion seal, thus imparting an outwardly stepped-up thickness to service gasket 108 as in previously described embodiments. A spacer sheet 154 is sandwiched between sealing sheet 162 and one of sealing sheets 152. The presence of spacer sheet 154 enables sealing sheet 162 to behave as an independent spring while having the same or a similar profile to sealing sheets 152 within seal 140. Spacer sheets 154 may have a planar configuration, as in previously described embodiments. A spring sheet (not shown) might also be used, having a wave spring within the combustion seal.

A number of base layers 50, 150 may be greater than a number of service layer(s) 60, 160. In particular, a number of base layers 50, 150 may be equal to five, and a number of service layer(s) 60, 160 may be equal to one or two, considering spacer sheet 154 as a service layer. In other embodiments, these numbers may differ. For instance, additional spacer sheets may be sandwiched between sealing sheets to render thicker inner and outer radial regions, but still having the stepped-up thickness. For reasons further explained below, a number of sealing sheets used in the service layers may be greater than one, rendering a still thicker outer radial region 32. Multiple spacer layers might also be provided in the service layers. A relatively thicker outer radial region may be used to compensate for greater depth of material removed from the engine block top face, in a single service procedure or over the course of several service procedures. In most embodiments, upper and lower surfaces 25 and 27 and their counterparts in Figure 7 will reside on a metallic sealing sheet as described herein, having a full sealing bead within the combustion seal and half sealing beads within the low pressure seals.

### Industrial Applicability

Referring to the drawings generally, but in particular now to Figure 6, there is shown an enlarged view of engine 10 assembled and prepared for service. Material has been removed from top face 20 of engine block 18, and service gasket 8 has been installed in place of a standard gasket (not shown) previously positioned between engine head 12 and engine housing 14. The present description of service gasket 8 should be understood to analogously refer to other embodiments contemplated herein. Cylinder liner 16 resides within engine block 18 such that it protrudes from top face 20. A conventional cylinder liner projection 23 is shown extending from sealing surface 22 toward engine head 12. Depending upon the service procedure having been performed, cylinder liner 16 may have been removed from engine block 18 and reinstalled, swapped with a substitute cylinder liner, or simply left in place.

A first distance 104 is shown in Figure 6 and identifies a protrusion distance specified for distributing clamping loads among seals of the standard gasket. The specified protrusion distance may be equal to about 0.150 millimeters, but could vary depending upon the desired distribution of clamping loads as described herein. A second distance 106 is shown and identifies an increase in the protrusion distance during servicing. In other words, second distance 106 is a distance defined by a thickness of material which is removed via machining top face 20. Those skilled in the art will appreciate that the thickness of material removed will typically depend upon a depth of significant defects or the like to be remedied, but also in certain instances depending upon the machining technique used to remove material. In some instances, technicians might remove material from the top face of engine block 18 to provide a clean, flat surface regardless of the presence or absence of defects. Certain conventional machining techniques may be capable of reliably removing about 0.23 millimeters to about 0.27 millimeters of material, typically no less. Accordingly, distance 106 may be equal to between about 0.23 millimeters and about 0.27 millimeters, or greater, although the present disclosure is not thereby limited. As alluded to above, the increased thickness of service gasket 8 in outer radial region 32 as compared with a standard gasket makes up for the removed material with regard to the distribution of clamping loads. The standard gasket which has been removed will typically have a uniform thickness from its inner perimeter to its outer perimeter, in contrast to the stepped-up thickness of service gasket 8 shown in Figure 6.

In Figure 6, combustion seal 42 is positioned between sealing surface 22 of cylinder liner 16 and engine head 12, and low pressure seals 40 are positioned between top face 20 of engine block 18 and engine head 12. Engine head 12 is clamped to engine housing 14 by way of bolts 70 such that a clamping load between engine head 12 and engine housing 14 is transmitted between engine head 12 and engine housing 14 through service gasket 8. In one practical implementation strategy, bolts 70 may each be loaded to about 150 kilo-Newtons. Distribution of the clamping load may be such that about 60% of the load is transmitted through combustion seal 42, whereas about 40% of the load is transmitted through low pressure seals 40.

When an engine is received for servicing, it may be serviced for the first time, or may have previously been serviced any number of times. Accordingly, material may have been removed from the top face of the engine block one or more times before. The present disclosure is contemplated to be applicable to servicing and assembling an internal combustion engine, and compensating for an increased protrusion distance of a cylinder liner, regardless of how many times the engine has been serviced such that material has been removed from a top face of its engine block. For instance, if the engine is to be repaired, rebuilt or remanufactured a first time since placing in service, the material removed from engine block 18 may be a first removal of material such that a relatively minor increase in the protrusion distance results. In such a case, the service gasket installed to compensate for the increased protrusion distance may include only one non-pervasive service layer, for instance having a total of one metallic sealing sheet with a thickness as discussed herein. If the engine is instead being serviced for a second, third, or more times, material may be removed from the engine block such that a relatively greater increase in the protrusion distance occurs. In such a case, the service gasket might include two, three, four or more non-pervasive service layers to compensate for the increased protrusion distance. The embodiment of Figure 7, having one sealing sheet and one spacer sheet might be used where an engine has been serviced a second time, or where a depth of material removed is relatively great during a first servicing. It is thus contemplated that technicians and/or dealers may keep on hand a collection of service gaskets, having several different outwardly stepped-up thickness profiles to enable them to select an appropriate service gasket for the job.

The present description is for illustrative purposes only and should not be construed to narrow the breadth of the present disclosure. Thus, those skilled in the art will appreciate that various modifications might be made to the presently disclosed embodiments without departing from the full and fair scope and spirit of the present disclosure. Other aspects, features and advantages of the present disclosure will be apparent upon an examination of the attached drawings and appended claims.

## Claims

1. A service gasket (8, 108) for sealing between an engine head (12) clamped to an engine housing (14) in an internal combustion engine (10), where the engine housing (14) includes an engine block (18) having a top face (20) machined during servicing such that a distance from the top face (20) to a sealing surface (22) of a protruding cylinder liner (16) is increased from a distance specified for distributing a clamping load between the engine head (12) and the engine housing (14) among a plurality of seals of a standard gasket, the service gasket (8, 108) comprising:
a one-piece laminate body (24) including an outer perimeter (26), an inner perimeter (28) defining a cylinder opening (30) having a center axis (100), an outer radial region (32, 132) adjoining the outer perimeter (26), and an inner radial region (34) adjoining the inner perimeter (28);
the outer radial region (32, 132) defining a plurality of bolting apertures (36) and a plurality of fluid transfer apertures (38), and including a plurality of low pressure seals (40, 140) extending about the plurality of fluid transfer apertures (38), and being positionable between the engine head (12) and the top face (20) of the engine block (18);
the inner radial region (34) having a high pressure combustion seal (42) extending about the cylinder opening (30), and being positionable between the engine head (12) and the cylinder liner sealing surface (22); and
the one-piece laminate body (24) further including a plurality of pervasive base layers (50, 150) located in both the outer and inner radial regions (32, 34, 132), and at least one non-pervasive service layer (60, 160) located in the outer radial region (32, 132), such that the one-piece laminate body (24) has an outwardly stepped-up thickness configured to compensate for the increased distance in distributing the clamping load.

2. The service gasket (8, 108) of claim 1 wherein:
each one of the plurality of pervasive base layers (50, 150) includes an exposed inner perimetric edge (77) adjoining the cylinder opening (30);
the inner perimeter (28) is a first circular inner perimeter (28) and the combustion seal (42) has an annular configuration and is concentric with the first circular inner perimeter (28), and wherein the non-pervasive service layer (60, 160) includes a second circular inner perimeter (29) concentric with the first circular inner perimeter (28) and being spaced outwardly thereof; and
each of the fluid transfer apertures (38) is defined by all of the plurality of pervasive base layers (50, 150) and by the at least one non-pervasive service layer (60, 160).

3. The service gasket (8, 108) of claim 1 wherein:
the plurality of pervasive base layers (50, 150) include a set of metallic spacer sheets (54) sandwiched between a set of metallic sealing sheets (62, 162);
the plurality of pervasive base layers (50, 150) further include a metallic spring sheet (56) sandwiched between the metallic spacer sheets (54) and having a wave configuration within the combustion seal (42);

4. The service gasket (8, 108) of claim 3 wherein the at least one non-pervasive service layer (60, 160) includes another metallic sealing sheet (62, 162), and wherein the combustion seal (42) includes a full bead seal (42) and each of the low pressure seals (40) includes a half bead seal (40).

5. The service gasket (8, 108) of claim 3 wherein:
a number of the plurality of pervasive base layers (50, 150) is greater than a number of the at least one non-pervasive service layer (60, 160); and
the another metallic sealing sheet (62, 162) has a thickness which is from about 0.2 millimeters to about 0.3 millimeters.

6. A service gasket (8, 108) for sealing between an engine head (12) clamped to an engine housing (14) in an internal combustion engine (10) comprising:
a one-piece laminate body (24) including an outer perimeter (26), an inner perimeter (28) defining a cylinder opening (30) having a center axis (100), an outer radial region (32, 132) adjoining the outer perimeter (26), and an inner radial region (34) adjoining the inner perimeter (28);
the outer radial region (32, 132) defining a plurality of bolting apertures (36) and a plurality of fluid transfer apertures (38), and including a plurality of low pressure seals (40, 140) extending about the plurality of fluid transfer apertures (38) and being positionable between the engine head (12) and the top face (20) of an engine block (18) of the engine housing (14);
the inner radial region (34) having a high pressure combustion seal (42) extending about the cylinder opening (30), and being positionable between the engine head (12) and a sealing surface (22) of a cylinder liner (16) protruding from the top face (20); and
the one-piece laminate body (24) further including a plurality of pervasive base layers (50, 150) extending from the outer perimeter (26) to the inner perimeter (28), and at least one non-pervasive service layer (60, 160) located outwardly of the inner radial region (34), such that the service gasket (8, 108) has an outwardly stepped-up thickness compensating for increasing a protrusion distance of the sealing surface (22) during servicing the internal combustion engine (10).

7. The service gasket (8, 108) of claim 6 wherein:
the plurality of pervasive base layers (50, 150) include a set of metallic spacer sheets (54) sandwiched between a set of metallic sealing sheets (62, 162), and a sealing bead (76) of the combustion seal (42); and
the at least one non-pervasive service layer (60, 160) includes another metallic sealing sheet (162), and a plurality of sealing beads (78) of the plurality of low pressure seals (40); and
the combustion seal (42) includes a full bead seal (42), and each of the plurality of low pressure seals (40) includes a half bead seal (40).

8. The service gasket (108) of claim 7 wherein all of the metallic sealing sheets (62, 162) include congruent profiles.

9. The service gasket (8) of claim 7 wherein the metallic sealing sheets (52) of the base layers (50) each include a base profile, and the another metallic sealing sheet (62) includes an inverted profile.

10. A method of preparing an internal combustion engine (10) for service comprising the steps of:
receiving an engine housing (12) including an engine block (18) having a top face (20) machined such that a distance from the top face (20) to a sealing surface (22) of a protruding cylinder liner (16) is increased from a distance specified for distributing a clamping load between the engine head (12) and the engine housing (14) through a standard gasket;
installing a service gasket (8, 108) including a one-piece laminate body (24) having a high pressure combustion seal (42) and a plurality of fluid transfer seals (40) between the engine head (12) and the engine housing (14);
clamping the engine head (12) to the engine housing (14) via a plurality of bolts (70) extending through a plurality of bolting apertures (36) formed in the service gasket (8, 108); and
distributing a clamping load between the engine head (12) and the engine housing (14) through the service gasket (8, 108) such that an outwardly stepped-up thickness of the gasket (8, 108) compensates for the increased distance.
